# FASCICULE DE BREVET EUROPEEN

(11) **EP 4 037 924 B1**
(45) Date de publication et mention de la délivrance du brevet: **18.10.2023**
(21) Numéro de dépôt: 20775035.7
(22) Date de dépôt: 11.08.2020
(51) Int. Cl.: B60K 1/04, B60L 50/60, B62D 25/20, B60R 22/22

(54) **VÉHICULE COMPRENANT UN SYSTÈME DE FIXATION D'UN DISPOSITIF DE CEINTURE DE SÉCURITÉ**
FAHRZEUG MIT BEFESTIGUNGSMITTEL FÜR EINEN SICHERHEITSGURT
VEHICLE WITH FIXING MEANS FOR SEAT BELT DEVICE

(30) Priorité: 30.09.2019 FR 1910800
(43) Date de publication de la demande: 10.08.2022
(73) Titulaire: PSA Automobiles SA, 78300 Poissy (FR)
(72) Inventeur: GROSSET, Romain, 94230 Cachan (FR); CORNEFERT, Arnaud, 94240 L'Hay les Roses (FR); SEVRIN, Alexandre, 91400 Orsay (FR)
(86) Numéro de dépôt international: PCT/FR2020/051459
(87) Numéro de publication internationale: WO 2021/064301

(56) Documents cités:
- WO-A1-2012/010769
- JP-A- H06 344 955
- JP-A- 2002 134 084
- JP-A- 2013 103 635
- JP-A- 2013 252 772
- JP-A- 2018 122 724
- US-A1- 2014 008 137

## Description

### DOMAINE TECHNIQUE DE L'INVENTION

La présente invention se rapporte au domaine des véhicules, notamment des véhicules automobiles, et vise un véhicule comprenant un système de fixation d'un dispositif de ceinture de sécurité pour des passagers de rang 2 ou supérieur, autrement dit des passagers situés à l'arrière de l'habitacle par rapport au conducteur et au(x) passager(s) assis à l'avant.

### ETAT DE LA TECHNIQUE

Comme cela est connu, les véhicules de transport terrestre, en particulier les véhicules automobiles, comprennent des dispositifs de retenue, couramment désignés « ceintures de sécurité », pour retenir les occupants du véhicule sur leur siège en cas de choc, en particulier en cas de choc avant ou de choc arrière, dans une direction sensiblement longitudinale du véhicule. Le document JP 2002-134084A décrit un véhicule électrique selon le préambule de la revendication 1.

Par « ceinture de sécurité », on entend ici un système de sécurité, formant un dispositif de retenue d'un passager sur son siège en cas de choc, comprenant un enrouleur, une sangle fixée par une extrémité à l'enrouleur et par une autre extrémité à un point d'ancrage relié à la caisse, une boucle engagée sur la sangle et un attache-boucle relié à la caisse via un point d'ancrage, dans lequel la boucle est destinée à s'engager ; la boucle peut se libérer de l'attache-boucle par une pression sur un bouton-pressoir.

L'objectif des ceintures de sécurité est par conséquent d'éviter que les occupants du véhicule soient projetés, lors du choc, ce qui risquerait de provoquer des blessures graves.

Da manière connue, les ceintures de sécurité pour les passagers situés au rang 2, c'est-à-dire assis derrière les occupants situés à l'avant de l'habitacle (le conducteur et le(s) passager(s) avant(s), autrement dit situés au rang 1), sont disposées au niveau d'un corps creux de la traverse d'assise arrière. Cela limite fortement le volume disponible pour implanter des batteries sous la caisse, c'est-à-dire sous le plancher d'habitacle du véhicule, dans le contexte d'un véhicule électrique.

Il existe donc un besoin pour un système de fixation de ceinture de sécurité pour les passagers de rang 2 d'un véhicule, qui soit moins volumineux, dans le contexte d'un véhicule électrique comprenant une batterie située sous caisse.

A cette fin, l'invention consiste à proposer un véhicule comprenant un système de fixation des attaches de ceintures de sécurité de rang 2, dans un véhicule électrique ayant une batterie sous caisse logée dans un boîtier fixé solidement à la caisse, via un organe de fixation, à la traverse d'assise arrière qui, au travers de pièces d'entretoisement soudées entre elles, sollicite l'organe de fixation de la batterie.

### PRESENTATION DE L'INVENTION

Plus précisément, l'invention a pour objet un véhicule électrique comprenant une caisse, une batterie, un boîtier logeant ladite batterie, un habitacle présentant un plancher, une assise de rang au moins égal à 2, pour au moins un passager arrière du véhicule, avec une traverse d'assise supportant ladite assise, un dispositif de ceinture de sécurité pour ledit au moins un passager arrière, et un système de fixation dudit dispositif de ceinture de sécurité, ledit dispositif de ceinture de sécurité comportant au moins deux points d'ancrage couplés à ladite traverse d'assise, ledit boîtier logeant la batterie étant situé sous le plancher d'habitacle du véhicule, en partie sous ladite assise et en partie à l'avant de ladite assise, ledit boîtier présentant un organe de fixation pour fixer le boîtier à la caisse du véhicule, le système de fixation comprenant des moyens de fixation desdits points d'ancrage à ladite traverse d'assise et des moyens de solidarisation comprenant au moins une pièce d'entretoisement et des soudures, configurés pour rendre ladite traverse d'assise solidaire dudit organe de fixation du boîtier de la batterie.

Avantageusement, le système comprend une pièce d'extension et de renfort soudée à ladite traverse d'assise, ladite pièce d'extension et de renfort assurant le couplage des points d'ancrage à ladite traverse d'assise.

Avantageusement, la pièce d'extension et de renfort est une plaque pliée et emboutie.

Avantageusement, la pièce d'extension et de renfort est soudée à la traverse d'assise du côté de ladite traverse d'assise orienté vers l'avant du véhicule.

Avantageusement, les moyens de solidarisation comprennent une pluralité de pièces d'entretoisement et de soudures pour souder entre elles lesdites pièces d'entretoisement, empilées, et pour souder ladite pluralité de pièces d'entretoisement à la traverse d'assise, d'une part, et à l'organe de fixation du boîtier de la batterie, d'autre part.

Avantageusement, la pluralité de pièces d'entretoisement comprend des pièces d'entretoisement internes pour renforcer la traverse d'assise et des pièces d'entretoisement externes pour supporter l'organe de fixation.

Avantageusement, la ceinture de sécurité comprenant une sangle, une boucle et un attache-boucle destiné à recevoir ladite boucle, ledit système est configuré pour transmettre une reprise d'effort, via les moyens de solidarisation, depuis l'attache-boucle de la sangle jusqu'à l'organe de fixation dans une direction sensiblement avant-arrière du véhicule.

Avantageusement, l'organe de fixation du boîtier de la batterie est fixé sous la caisse du véhicule.

Avantageusement, la traverse d'assise est disposée à l'arrière de l'assise de rang au moins égal à 2.

Avantageusement, le véhicule comprend un système de motorisation électrique et ladite batterie est configurée pour alimenter en énergie ledit système de motorisation électrique.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
[Fig. 1] est une représentation schématique, vue de côté, d'un mode de réalisation du système de fixation d'une ceinture de sécurité selon l'invention ;
[Fig. 2] est une représentation schématique, vue de dessous, du même mode de réalisation du système de fixation d'une ceinture de sécurité selon l'invention ;
[Fig. 3] est une représentation schématique, vue de dessus, du même mode de réalisation du système de fixation d'une ceinture de sécurité selon l'invention.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

La présente invention trouve son application dans le contexte d'un véhicule électrique disposant d'une batterie, notamment destinée à alimenter un système de motorisation électrique, située dans un boîtier, logée sous la caisse, c'est-à-dire sous le plancher d'habitacle du véhicule. Le boîtier logeant la batterie comprend un organe de fixation qui est solidement fixé à la caisse du véhicule, notamment via une pluralité de vis de fixation.

La présente invention vise un véhicule comprenant un système de fixation de ceintures de sécurité pour les passagers de rang 2 situés à l'arrière d'une portion au moins de l'organe de fixation permettant d'arrimer le boîtier logeant la batterie à la caisse du véhicule.

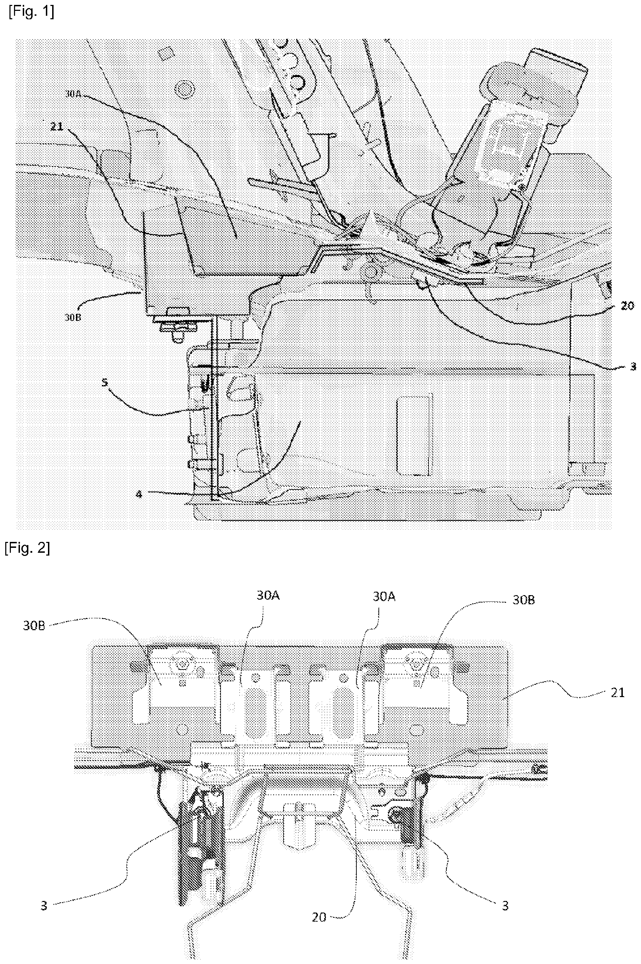

Dans les véhicules automobiles, de façon générale, les ceintures de sécurité sont fixées directement ou indirectement à la caisse. En particulier, en référence aux figures 1 et 2, les points d'ancrage 3 sont couplés à une traverse d'assise 21 de l'assise de rang 2. La traverse d'assise 21 est notamment disposée à l'arrière de ladite assise de rang 2. En particulier, comme représenté sur les figures 1 et 2, les points d'ancrage 3 sont fixés à une pièce d'extension et de renfort 20 située devant la traverse d'assise 21 et soudée à cette dernière. Notamment, la pièce de renfort et d'extension 20 est une plaque pliée et emboutie, soudée par soudure point ou par soudure continue à la traverse d'assise 21. En cas de choc, les ceintures de sécurité génèrent par conséquent des efforts de traction s'exerçant, via la sangle 11, la boucle 13, l'attache-boucle 12, les points d'ancrage 3 et la pièce d'extension et de renfort 20 sur la traverse d'assise 21 située sous l'assise de rang 2, ces efforts de traction étant transmis au plancher d'habitacle.

Pour assurer la sécurité des passagers, comme indiqué précédemment, le système de fixation de la ceinture de sécurité à la caisse du véhicule est, dans l'état de l'art, lourd et encombrant, afin d'assurer une fixation adéquate de la ceinture de sécurité à la caisse du véhicule. Autrement dit, le système de fixation doit pouvoir encaisser un choc, lors d'un accident de la circulation, en retenant sur son siège le passager concerné, et donc sans risque d'arrachement vis-à-vis de la caisse. Cette lourdeur, cet encombrement, sont nuisibles notamment en ce qu'ils réduisent l'espace disponible pour loger une batterie destinée à fournir de l'énergie à un système de motorisation électrique dans un véhicule électrique.

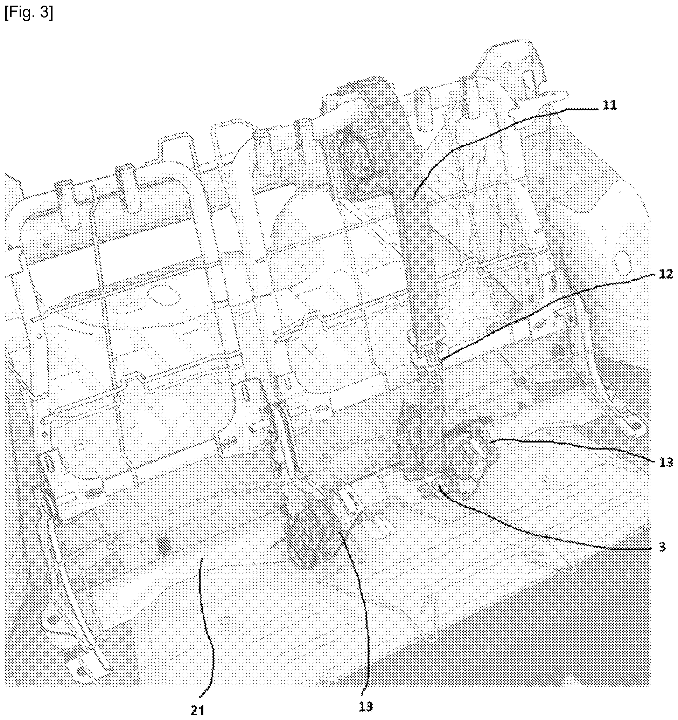

Les figures 1 et 2 montrent un exemple de système de fixation d'une ceinture de sécurité, selon l'invention, respectivement vu de côté et vu de dessous, tandis que la figure 3 montre le même système vu de dessus, pour en donner une vue globale.

Conformément à l'invention, des moyens de solidarisation, comprenant au moins une pièce d'entretoisement 30A, 30B et des soudures, permettent de solidariser la traverse d'assise 21 et la pièce de renfort et d'extension 20, à laquelle sont fixés, par des moyens de fixation adaptés, les points d'ancrage 3 de la ceinture de sécurité, à l'organe de fixation 5 du boîtier 4 logeant la batterie du véhicule. Sous la traverse d'assise 21, il y a en effet un empilage de pièces d'entretoisement 30A, 30B permettant de solidariser ladite traverse d'assise 21, à laquelle sont couplés les points d'ancrage 3 de la ceinture de sécurité, à un point rigide de l'organe de fixation 5 du boîtier 4 de la batterie à la caisse du véhicule, sous la traverse d'assise 21.

Notamment, les pièces d'entretoisement 30A, 30B sont constitués de pièces d'entretoisement internes 30A, pour renforcer et rigidifier la traverse d'assise 21, et de pièces d'entretoisement externes 30B, pour supporter l'organe de fixation 5 du boîtier 4 de la batterie. En particulier, une partie inférieure des pièces d'entretoisement externes 30B assure le support de l'organe de fixation 5.

Ainsi, le système de fixation selon l'invention permet de réaliser une reprise d'effort via les moyens de solidarisation, depuis la sangle 11, l'attache-boucle 12 et les points d'ancrage 3 de la ceinture de sécurité jusqu'à l'organe de fixation 5 dans une direction sensiblement avant-arrière du véhicule.

De ce fait, les points d'ancrage 3 des ceintures et l'attache boucle 12 sont correctement maintenus, la déformation de la zone plancher d'assise est faible et le passager arrière est correctement retenu par sa ceinture de sécurité.

En pratique, le système de fixation du véhicule selon l'invention permet de solidariser la traverse d'assise 21 à l'organe de fixation 5 du boîtier 4 de la batterie à la caisse du véhicule électrique.

## Revendications

1. Véhicule électrique comprenant une caisse, une batterie, un boîtier (4) logeant ladite batterie, un habitacle présentant un plancher, une assise de rang au moins égal à 2, pour au moins un passager arrière du véhicule, avec une traverse d'assise (21) supportant ladite assise, un dispositif de ceinture de sécurité pour ledit au moins un passager arrière, et un système de fixation dudit dispositif de ceinture de sécurité, ledit dispositif de ceinture de sécurité comportant au moins deux points d'ancrage (3) couplés à ladite traverse d'assise (21), **caractérisé en ce que** ledit boîtier (4) logeant la batterie est situé sous le plancher d'habitacle du véhicule, en partie sous ladite assise et en partie à l'avant de ladite assise, ledit boîtier (4) présentant un organe de fixation (5) pour fixer le boîtier (4) à la caisse du véhicule, le système de fixation comprenant des moyens de fixation desdits points d'ancrage (3) à ladite traverse d'assise (21) et des moyens de solidarisation comprenant au moins une pièce d'entretoisement (30A, 30B) et des soudures, configurés pour rendre ladite traverse d'assise (21) solidaire dudit organe de fixation (5) du boîtier (4) de la batterie.

2. Véhicule selon la revendication 1, dans lequel le système de fixation comprend une pièce d'extension et de renfort (20) soudée à ladite traverse d'assise (21), ladite pièce d'extension et de renfort (20) assurant le couplage des points d'ancrage (3) à ladite traverse d'assise (21).

3. Véhicule selon la revendication 2, dans lequel la pièce d'extension et de renfort (20) est une plaque pliée et emboutie.

4. Véhicule selon la revendication 2 ou 3, dans lequel la pièce d'extension et de renfort (20) est soudée à la traverse d'assise (21) du côté de ladite traverse d'assise (21) orienté vers l'avant du véhicule.

5. Véhicule selon l'une des revendications précédentes, dans lequel les moyens de solidarisation comprennent une pluralité de pièces d'entretoisement (30) et de soudures pour souder entre elles lesdites pièces d'entretoisement (30), empilées, et pour souder ladite pluralité de pièces d'entretoisement (30) à la traverse d'assise (21), d'une part, et à l'organe de fixation (5) du boîtier (4) de la batterie, d'autre part.

6. Véhicule selon la revendication précédente, dans lequel la pluralité de pièces d'entretoisement comprend des pièces d'entretoisement internes (30A) pour renforcer la traverse d'assise (21) et des pièces d'entretoisement externes (30B) pour supporter l'organe de fixation (5).

7. Véhicule selon l'une des revendications précédentes, la ceinture de sécurité comprenant une sangle (11), une boucle (13) et un attache-boucle (12) destiné à recevoir ladite boucle (13), ledit système étant configuré pour transmettre une reprise d'effort, via les moyens de solidarisation (30), depuis l'attache-boucle (12) de la sangle (11) jusqu'à l'organe de fixation (5) dans une direction sensiblement avant-arrière du véhicule.

8. Véhicule électrique selon la revendication précédente, dans lequel l'organe de fixation (5) du boîtier (4) de la batterie est fixé sous la caisse du véhicule.

9. Véhicule selon la revendication 7 ou 8, dans lequel la traverse d'assise (21) est disposée à l'arrière de l'assise de rang au moins égal à 2.

10. Véhicule selon l'une des revendications précédentes, le véhicule comprenant un système de motorisation électrique et ladite batterie étant configurée pour alimenter en énergie ledit système de motorisation électrique.

## Patentansprüche

1. Elektrisches Fahrzeug mit einem Kasten, einer Batterie, einem die Batterie aufnehmenden Gehäuse (4), einem Fahrgastraum mit einem Boden, einer Sitzfläche von mindestens 2 für mindestens einen hinteren Fahrzeuginsassen, mit einem die Sitzfläche tragenden Sitzsteg (21), einer Sicherheitsgurtvorrichtung für den mindestens einen hinteren Fahrzeuginsassen und einer Befestigungsvorrichtung für die Sicherheitsgurtvorrichtung, wobei die Sicherheitsgurtvorrichtung mindestens zwei Punkte aufweist Verankerung (3), die mit der Sitztraverse (21) gekoppelt ist,
**Dadurch gekennzeichnet, dass** sich das die Batterie aufnehmende Gehäuse (4) unter dem Fahrgastraumboden des Fahrzeugs befindet, teilweise unter dem Sitz und teilweise vor dem Sitz, wobei das Gehäuse (4) ein Befestigungselement (5) zur Befestigung des Gehäuses (4) am Fahrzeugaufbau aufweist, wobei das Befestigungssystem Mittel zur Befestigung der Verankerungspunkte (3) an dem Sitzträger (21) und Mittel umfasst Anordnung mit mindestens einem Abstandhalter (30A, 30B) und Schweißnähten, die so ausgebildet sind, dass der Sitzträger (21) mit dem Befestigungselement (5) des Batteriegehäuses (4) fest verbunden ist.

2. Fahrzeug nach Anspruch 1, wobei das Befestigungssystem ein Verlängerungs- und Verstärkungselement (20) umfasst, das mit dem Sitzträger (21) verschweißt ist, wobei das Verlängerungs- und Verstärkungselement (20) die Ankerpunkte (3) mit dem Sitzträger (21) verbindet.

3. Fahrzeug nach Anspruch 2, wobei das Verlängerungs- und Verstärkungselement (20) eine gefaltete und tiefgezogene Platte ist.

4. Fahrzeug nach Anspruch 2 oder 3, bei dem das Verlängerungs- und Verstärkungselement (20) mit dem Sitzträger (21) auf der nach vorn gerichteten Seite des Sitzträgers (21) verschweißt ist.

5. Fahrzeug nach einem der vorhergehenden Ansprüche, bei dem die Verbindungsmittel eine Vielzahl von Abstandselementen (30) und Schweißungen zum Verschweissen der gestapelten Abstandselemente (30) untereinander und zum Verschweißen der Vielzahl von Abstandselementen (30) mit dem Sitzträger (21) einerseits und mit dem Befestigungselement (10) andererseits umfassen. 5) des Batteriegehäuses (4).

6. Fahrzeug nach dem vorhergehenden Anspruch, bei dem die Vielzahl von Abstandselementen innere Abstandselemente (30A) zum Verstärken des Sitzträgers (21) und äußere Abstandselemente (30B) zum Tragen des Befestigungselements (5) aufweist.

7. Fahrzeug nach einem der vorhergehenden Ansprüche, wobei der Sicherheitsgurt einen Gurt (11), eine Schlaufe (13) und eine Schlingenhalterung (12) zur Aufnahme der Schlaufe (13) umfasst, wobei das System so konfiguriert ist, dass es über die Verbindungsmittel (30) eine Kraftübernahme von der Schlingenhalterung (12) des Gurtes (11) auf das Organ überträgt Befestigungsvorrichtung (5) in einer im Wesentlichen vorderen Rückwärtsrichtung des Fahrzeugs.

8. Elektrisches Fahrzeug nach dem vorhergehenden Anspruch, wobei das Befestigungselement (5) des Batteriegehäuses (4) unter dem Fahrzeugaufbau befestigt ist.

9. Fahrzeug nach Anspruch 7 oder 8, bei dem der Sitzträger (21) hinter der Sitzfläche mit einer Reihe von mindestens 2 angeordnet ist.

10. Fahrzeug nach einem der vorhergehenden Ansprüche, wobei das Fahrzeug ein elektrisches Motorsystem umfasst und die Batterie konfiguriert ist, um das elektrische Motorsystem mit Energie zu versorgen.

## Claims

1. An electric vehicle consisting of a body, battery, housing (4) housing the battery, a passenger compartment with a floor, a seat of at least 2, for at least one rear passenger of the vehicle, with a seat belt (21) supporting the seat, a seat belt device for the said rear passenger, and a seat belt attachment system for the said seat belt device with at least two points anchorage (3) coupled to the said seat cross (21),
**characterized in that** case (4) housing the battery is located below the vehicle cabin floor, partly under the seat and partly at the front of the seat, the said case (4) having a fastening device (5) to secure the case (4) to the vehicle body, the fastening system including means of attachment of the said anchorage points (3) to the said seat belt (21) and means of solidity This unit consists of at least one intersecting part (30A, 30B) and welds, configured to make the said seat cross (21) in solidarity with the said mounting part (5) of the housing (4) of the battery.

2. Vehicle according to Claim 1, in which the attachment system includes an extension and reinforcement piece (20) welded to the said seat cross (21), the said extension and reinforcement piece (20) ensuring the coupling of the anchorage points (3) to the said seat cross (21).

3. Vehicle according to Claim 2, in which the extension and reinforcement part (20) is a folded and bottled plate.

4. Vehicle according to claim 2 or 3, in which the extension and reinforcement part (20) is welded to the seat cross (21) on the side of the seat cross (21) facing forward of the vehicle.

5. Vehicle according to one of the preceding claims, in which the means of solidarization include a plurality of interrosion parts (30) and welds to solder between them the said interrosion parts (30), stacked, and to solder the said plurality of interrosion parts (30) to the seat cross (21), on the one hand, and to the body of fixing (5) of the enclosure (4) of the battery, on the other hand.

6. Vehicle according to the previous claim, in which the plurality of interrosion parts includes internal interrosion parts (30A) to strengthen the seat cross (21) and external interrosion parts (30B) to support the attachment part (5).

7. Vehicle according to one of the preceding claims, the safety belt consisting of a strap (11), a loop (13) and a buckle attachment (12) intended to receive the buckle (13), the said system being configured to transmit a retraction of effort, via means of solidarization (30), from the buckle attachment (12) of the strap (11) to the attachment part (5) in a substantially forward direction of the vehicle.

8. Electric vehicle in accordance with the previous claim, in which the attachment part (5) of the battery housing (4) is attached to the vehicle body.

9. Vehicle according to claim 7 or 8, in which the seat cross (21) is positioned at the rear of the seat at a rank of at least 2.

10. Vehicle according to one of the previous demands, the vehicle comprising an electric motorization system and the said battery being configured to power the said electric motorization system.
